Europäisches Patentamt

European Patent Office

Office européen des brevets

(19)

(11) Publication number: **0 215 598**
**B1**

# (12) EUROPEAN PATENT SPECIFICATION

(45) Date of publication of the patent specification:
**20.12.89**

(21) Application number: **86306684.1**

(22) Date of filing: **29.08.86**

(51) Int. Cl.⁴: **F16D 65/12**

(54) Improvements relating to wheel mounted discs.

(30) Priority: **03.09.85 GB 8521802**

(43) Date of publication of application:
**25.03.87 Bulletin 87/13**

(45) Publication of the grant of the patent:
**20.12.89 Bulletin 89/51**

(84) Designated Contracting States:
**DE FR GB IT**

(56) References cited:
**EP-A- 0 159 639**
**DE-B- 1 175 721**
**DE-B- 1 258 444**
**GB-A- 1 359 388**
**GB-A- 1 478 696**
**GB-A- 1 526 204**
**GB-A- 1 528 126**
**GB-A- 2 136 921**

(73) Proprietor: **LUCAS INDUSTRIES public limited company,**
**Kings Road, Tyseley Birmingham B11 2AH(GB)**

(72) Inventor: **Tickle, Colin John Frederick, 15 Stonewalls,**
**Burton Rossett Clwyd(GB)**

(74) Representative: **Stringer, David Hiram et al, W.P.**
**THOMPSON & CO Coopers Building Church Street,**
**Liverpool L1 3AB(GB)**

ACTORUM AG

## Description

The present invention relates to a wheel incorporating a braking disc.

In particular the present invention relates to a wheel comprising a central hub and an outer rim, the hub and rim being interconected by a web, with an annular braking disc secured to each side of the web. The braking disc may be a complete continuous annulus or composed to two or more curved segments. In certain wheels, especially railway vehicle wheels, high duty braking discs are required to cater for the braking of very large masses from high speeds. Certain such known braking discs are provided with a series of spaced apart holes through which bolts extend to secure the discs to the web of a wheel. However, as a result of the large amount of heat generated in the braking discs under braking, differential expansion causes large internal stresses to be set up around the bolt holes, and as a result surface cracking can and does occur. Clearly this is undesirable as it reduces the life of the braking disc.

It is already known from GB-A 1 528 126 to have a wheel comprising a central hub and an outer rim, the hub and rim being interconnected by a web, with an annular braking disc secured to each side of the web, each braking disc being formed by two curved segments. The segments are each secured to the wheel by a gripping member which engages over the radially outer edge of the curved segment and by two spring members which are each secured to the central hub and to the radially inner edge of the curved segment.

Further, it is known from GB-A 1 478 696 to have a wheel comprising a central hub and an outer rim, the hub and rim being interconnected by a web, with a solid annular braking disc secured to each side of the web. Each solid annular braking disc is secured to the wheel by a number of spring members located between the rim of the wheel and the outer edge of the braking disc.

The aim of the present invention is to provide a wheel wherein the braking discs are formed in segments which are secured to the web without the need for holes in the braking surfaces of the dissegments, whilst accommodating thermal expansion without the occurrence of internal stresses at a detrimental level.

According to the present invention there is provided a wheel comprising a central hub, an outer rim and a web extending therbetween, an annular disc comprising at least two curved segments being mounted on the web, each segment being retained by one or more gripping members which are each secured to the whel and engage over the outer edge of the segment, characterised in that the or each gripping member is secured to the web or rim, or forms and integral part of the wheel, and in that resilient retaining connections are secured to the web and engage a surface provided at each end of the segment, said resilient retaining connections biassing the segment against the or each gripping member thus, when expanding due to the heat generated under braking, the outer edge (27) of the segments (9) can slide circumferentially in the gripping member (11).

In a preferred embodiment of the present invention the annular disc comprises two like segments, each of which has two end edges, each end edge including a curved surface which engages against a resilient retaining connection secured to the web. Two gripping members are provided for each segment and are bolted to the web at circumferentially spaced apart locations, the gripping members each engaging against the rim of the wheel and engaging around the outer circumferential edge of a segment. By virtue of the gripping members engaging against the rim of the wheel, the bolts securing the gripping members are free from any shock or centrifugal loading, and serve solely to locate the gripping members in the desired position.

Preferably each gripping member has an inclined gripping face which mates with an inclined portion of the outer circumferential edge of the segment, to hold the segment to the web. Due to these inclined mating faces, any centrifugal forces exerted on the segments due to rotation of the wheel, tend to force the segments closer to the web. Further, each gripping member is designed so that the reaction line normal to these mating inclined faces passes through the interface between the gripping member and the outer rim of the wheel. In this way there is no tendency for the segment to apply pressure against the part of the gripping member which engages around the segment, in a manner which could deform the gripping member and release the segment.

Preferably each resilient retaining connection comprises a roll pin which extends through a hole in the web and engages curved surfaces on adjacent end edges of the segments on both sides of the wheel. Each roll pin conventionally comprises a hollow cylindrical member made of spring steel, with an axially extending slot, preferably following a wavy path, being formed along the full length of the cylindrical member. The roll pin may be a close or a clearance fit in the hole in the web and has an end cap secured to each of its respective ends by a bolt passing axially through the pin, each end cap having an enlarged portion which engages in a recess in the curved surface provided in an end edge of a segment to aid in the retention of the segment to the wheel. Each end cap is further provided with a tongue which engages in the slot in the roll pin to thus retain the roll pin in the desired rotational position i.e. so that the slot of the roll pin does not itself face a curved end edge portion of a segment.

In use, as heat is generated in the braking disc under the action of braking, the segments of the disc expand with the outer edge of each segment, moving circumferentially whilst being held by the gripping members, and the curved surfaces at the end edges of the segments moving over the resilient retaining connections whilst still being retained by the associated end caps. Thus the segments are positively held on the web whilst being allowed to expand without internal stresses being produced to a detrimental level.

The point of engagement of the roll pins with the curved or angled plane surfaces of the segment ends is preferably arranged so that the deflection of the roll pins is maintained at a minimum value during disc segment expansion and contraction.

The present invention will now be further described, by way of example, with reference to the accompanying drawings, in which:-

Fig. 1 is a front view of one embodiment of a wheel constructed according to the present invention;

Fig. 2 is a cross sectional view taken along line X-X in Fig. 1;

Fig. 3 is a cross sectional view taken along line Y-Y in Fig. 1; and

Fig. 4 is an enlarged detail of the resilient retaining connection of Fig. 3.

A high duty wheel constructed according to the present invention is illustrated in the accompanying drawings. The wheel has a central hub 1 and an outer rim 3, interconnected by a central web 5. Braking discs 7 are mounted on each side of the central web 5, each braking disc being annular and comprising two like segments 9. Each segment 9 is secured to the wheel both by two circumferentially spaced apart gripping members 11, each of which is secured to the central web 5 and engages around a protruding feature on the outer circumferential edge 13 of the segment 9, and by resilient retaining connections 15 which are also secured to the central web 5 and which engage against curved surfaces 17 on the end edges 19 of the segments 9.

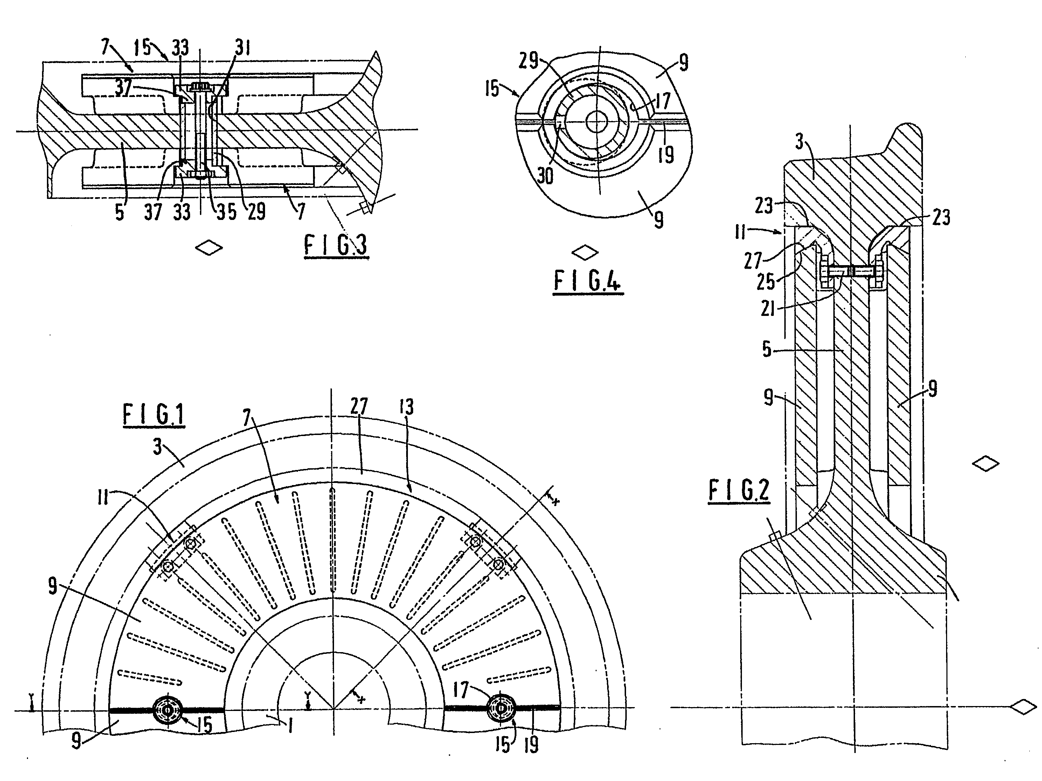

As can be best seen in Fig. 2 of the accompanying drawings, each gripping member 11 is generally hook-shaped in transverse cross-section, and is secured to the central web 5 by one or more bolts 21. Each gripping member 11 is designed so that when bolted to the central web 5 it has a radially outer face 23 with respect to the wheel, which face engages squarely against the rim 3. Thus the bolts 21 merely locate the gripping member 11 and do not take any radial shock or centrifugal loads, these being absorbed directly by the rim 3. Further, each gripping member 11 has an inclined face 25 which engages an equivalently inclined face 27 provided on the outer circumferential edge 13 of the segment 9. Thus any radial forces exerted on the segment 9 due to rotation of the wheel, tend to push the segment towards the central web 5, with the gripping members 11 being sandwiched between the segments 9 and the rim 3. The inclination of the mating faces 25, 27 is such that the line of reaction force passing normally through this interface, also passes through the interface between the radially outer face 23 of the gripping member 11, and the wheel rim 3. In this way there is no possibility of the radial forces on the gripping members 11 deforming the hook-shaped gripping member and releasing the segment.

As can be best seen in Figs. 3 and 4 of the accompanying drawings, each resilient retaining connection 15 comprises a roll pin 29 which extends through an aperture 31 in the central web 5, each roll pin 29 engaging an end edge 19 of each segment 9 on each side of the central web 5. The roll pin 29 conventionally comprises an elongate hollow cylinder made of spring steel, with an axial slot 30 with a wavy profile, extending for the full length of the pin. An end cap 33 is located on each end of the roll pin 29 and is secured thereon by a nut and bolt 35, the bolt extending through the pin. Each end cap 33 has an enlarged portion which engages in adjacent part cylindrical recesses provided in the curved surface 17 on the end edges of adjacent segments 9, to thus secure the end edge regions of the segments to the web 5. Further, each end cap 33 has a tongue 37 which engages in the slot of the roll pin 29 so that the selected rotational position of the roll pin 29 can be maintained by the friction between the end caps 33 and the part cylindrical recesses with which they engage. Preferably the rotational position of the roll pin 29 is selected so that the slot is not engaged by the curved surfaces 17 of the segments 9.

Each end cap also provides a cylindrical inwardly extending portion which is a clearance fit in the internal diameter of the roll pin, providing thereby a load bearing element to transfer the radially inwardly occurring shock loads from one segment through the diametrically opposite segment to its associated gripping members without causing the roll pin to be excessively deflected.

In use, outward radial forces exerted on the segments 9, are absorbed by the wheel rim 3, and when expanding due to the heat generated under braking, the outer edge 13 of the segments 9 can slide circumferentially in the hook-like gripping member 11 and the curved surfaces 17 on the end edges 19 can slide over and compress the resilient retaining connections 15. Thus the wheel disc segments 9 are positively retained at all times whilst being allowed to expand without internal stresses building to a detrimental level.

Whilst two gripping members 11 are provided in the above described embodiment of the present invention, it is envisaged that one centrally located gripping member 11 may suffice in certain applications, or alternatively more than two gripping members can be provided. Further, two or more resilient retaining connections 15 may alternatively be provided to engage each end edge 19 of each segment.

The present invention thus provides a simple and efficient wheel disc mounting, especially suitable for railway vehicles, obviating the necessity for holes in the braking surfaces of the disc.

**Claims**

1. A wheel comprising a central hub (1), an outer rim (3) and a web (5) extending therebetween, an annular disc (7) comprising at least two curved segments (9) being mounted on the web, each segment (9) being retained by one or more gripping members (11) which are each secured to the wheel and engage over the outer edge of the segment (9), characterised in that the or each gripping member (11) is secured to the web (5) or rim (3), or forms an integral part of the wheel, and in that resilient retaining connections (15) are secured to the web (5) and engage a surface (17) provided at each end of the segment (9), said resilient retaining connection (15) biasing the segment (9) against the or each gripping member (11), thus, when expanding due to the heat generated under braking, the outer edge (27) of the segments (9) can slide circumferentially in the gripping member (11).

2. A wheel as claimed in claim 1, wherein the annular disc (7) comprises two like segments (9) each of which has two end edges (19), each end edge (19) including a curved surface (17) which engages against a resilient retaining connection (15) secured to the web (5).

3. A wheel as claimed in claim 1 or claim 2, wherein two gripping members (11) are provided for each segment (9) and are secured to the web (5) at circumferentially spaced apart locations.

4. A wheel as claimed in any one of claims 1 to 3, wherein each gripping member (11) is secured to the web (5) so that the gripping member (11) also engages against the outer rim (3) of the wheel.

5. A wheel as claimed in any one of the preceding claims, wherein each gripping member (11) has a gripping face inclined to the plane of the disc, said gripping face (25) mating with an inclined face (27) provided on the periphery of the disc (7).

6. A wheel as claimed in claim 5, wherein said inclined face (27) is provided on a radially projecting part of the disc periphery.

7. A wheel as claimed in claim 5 or 6, when dependent upon claim 4, wherein said inclined mating faces (25,27) are designed such that the reaction line normal to these mating inclined faces passes through the interface (23) between the gripping member (11) and the outer rim (3) of the wheel.

8. A wheel as claimed in any one of the preceding claims, wherein each resilient retaining connection (15) comprises a roll pin (29) which extends through a bore (31) in the web (5) and engages curved surfaces (17) on adjacent end edges (19) of the segments (9) on both sides of the web (5).

9. A wheel as claimed in claim 8, wherein the roll pin (29) comprises a hollow cylindrical member made of spring steel with an axially extending slot (30) extending for the full length of the pin (29), completely through the wall of the pin (29).

10. A wheel as claimed in claim 8 or claim 9, wherein the roll pin (29) is a clearance fit in said bore (31).

11. A wheel as claimed in any one of claims 8, 9 and 10, wherein the roll pin (29) ( has an end cap (33) secured to each of its respective ends by a bolt (35) passing axially through the pin (29).

12. A wheel as claimed in claim 11, wherein each end cap (33) has an enlarged portion which engages in a recess in the curved surface (17) provided in an end edge (19) of a segment (9) to aid in the retention of the segment (9) to the wheel.

13. A wheel as claimed in claim 11 or 12, when dependent upon claim 8, wherein each end cap (33) has a tongue (37) which engages in the slot (30) in the roll pin (29).

## Patentansprüche

1. Rad mit einer zentralen Nabe (1), einem äußeren Radkranz (3) und einer sich dazwischen erstreckenden Radscheibe (5), an der eine kreisringförmige Scheibe (7) angeordnet ist, welche wenigstens zwei gekrümmte Segmente (9) umfaßt, von denen jedes von einer oder mehreren Klammern (11) gehalten ist, die je am Rad befestigt sind und auf dem Außenrand des Segments (9) anliegen, dadurch gekennzeichnet, daß die oder jede Klammer (11) an der Radscheibe (5) oder am Radkranz (3) befestigt oder mit dem Rad einstückig verbunden ist, und daß an der Radscheibe (5) elastische Halteverbinder (15) befestigt sind und an einer an jedem Ende des Seegments (9) vorgesehenen Fläche (17) anliegen, wobei die elastischen Halteverbinder (15) das Segment (9) gegen die oder jede Klammer (11) vorspannen, derart, daß bei Dehnung durch die beim Bremsen erzeugte Wärme der Außenrand (27) der Segmente (9) sich in der Klammer (11) in Umfangsrichtung verschieben kann.

2. Rad nach Anspruch 1, bei dem die kreisringförmige Scheibe (7) zwei gleiche Segmente (9) umfaßt, von denen jedes zwei Stirnränder (19) hat, wobei jeder Stirnrand (19) eine gekrümmte Fläche (17) aufweist, die an einem an der Radscheibe (59) befestigten elastischen Halteverbinder (15) anliegt.

3. Rad nach Anspruch 1 oder 2, bei dem für jedes Segment (9) zwei Klammern (11) vorgesehen und an der Radscheibe (5) an in Umfangsrichtung beabstandeten Stellen befestigt sind.

4. Rad nach einem der Ansprüche 1 bis 3, bei dem jede Klammer (11) an der Radscheibe (5) so befestigt ist, daß sie auch am äußeren Radkranz (3) des Rades anliegt.

5. Rad nach einem der vorhergehenden Ansprüche, bei dem jede Klammer (11) eine gegen die Scheibenebene geneigte Angriffsfläche aufweist, wobei diese Angriffsfläche (25) mit einer am Außenumfang der Scheibe (7) vorgesehenen Schrägfläche (27) zusammenpaßt.

6. Rad nach Anspruch 5, bei dem die Schrägfläche (27) an einem radial herausragenden Abschnitt des Scheibenaußenumfangs vorgesehen ist.

7. Rad nach Anspruch 5 oder 6 in Verbindung mit Anspruch 4, bei dem die geneigten Berührungsflächen (25, 27) so ausgebildet sind, daß die zu ihnen senkrechte Reaktionslinie durch die Berührungsfläche (23) zwischen der Klammer (11) und dem äußeren Radkranz (3) des Rades geht.

8. Rad nach einem der vorhergehenden Ansprüche, bei dem jeder elastische Halteverbinder (15) einen Schwerspannstift (29) umfaßt, der eine Bohrung (31) in der Radscheibe (5) durchdringt und an gekrümmten Flächen (17) an zugehörigen Stirnrändern (19) der Segmente (9) auf beiden Seiten der Radscheibe (5) anliegt.

9. Rad nach Anspruch 8, bei dem der Schwerspannstift (29) ein hohles zylindrisches Bauteil aus Federstahl mit einem axialen Schlitz (30) umfaßt, der sich über die gesamt Länge des Stiftes (29) erstreckt und die Wand des Stiftes (29) vollständig durchsetzt.

10. Rad nach Anspruch 8 oder 9, bei dem der Schwerspannstift (29) in der Bohrung (31) mit Spielpassung aufgenommen ist.

11. Rad nach einem der Ansprüche 8, 9 und 10, bei dem der Schwerspannstift (29) eine Endkappe (33) aufweist, die an jedem seiner zugehörigen Enden mit einem den Stift (29) axial durchdringenden Bolzen (35) befestigt ist.

12. Rad nach Anspruch 11, bei dem jede Endkappe (33) einen vergrößerten Abschnitt aufweist, der in einer Vertiefung in der gekrümmten Fläche (17), welche in einem Stirnrand (19) eines Segmentes (9) vorgesehen ist, anliegt, um beim Festhalten des Segmentes (9) am Rad mitzuwirken.

13. Rad nach Anspruch 11 oder 12 in Verbindung mit Anspruch 8, bei dem jede Endkappe (33) einen Ansatz (37) aufweist, der in den Schlitz (30) im Schwerspannstift (29) eingreift.

**Revendications**

1. Une roue comportant un moyeu central (1) une jante extérieure (3) et un flasque (5) s'étendant entre les deux, un disque annulaire (7) comprenant au moins deux segments incurvés (9) étant monté sur le flasque, chaque segment (9) étant maintenu par un ou plusieurs éléments de serrage (11) qui sont chacun fixés à la roue et en prise au-dessus du bord extérieur du segment (9), caractérisée en ce que l'élément ou chaque élément de serrage (11) est fixé au flasque (5) ou à la jante (3) ou constitue une partie intégrante de la roue, et en ce que les liaisons élastiques de maintien (15) sont fixées au flasque (5) et en prise avec une surface (17) prévue à chaque extrémité du segment (9), lesdites liaisons élastiques de maintien (15) sollicitant le segment (9) contre l'élément ou chaque élément de serrage (11), ce qui fait qu'en cas de dilatation due à la chaleur générée en cours de freinage, le bord extérieur (27) des segments (9) peut glisser dans une direction circonférentielle dans l'élément de serrage (11).

2. Une roue selon la revendication 1, dans laquelle le disque annulaire (7) comporte deux segments identiques (9) dont chacun a deux bords extrêmes (19), chaque bord extrême (19) comportant une surface incurvée (17) en prise contre une liaison élastique de maintien (15) fixée au flasque (5).

3. Une roue selon la revendication 1 ou 2, dans laquelle sont prévus deux éléments de serrage pour chaque segment (9) et sont fixés au flasque (5) en des emplacements écartés l'un de l'autre dans une direction circonférentielle.

4. Une roue selon l'une quelconque des revendications 1 à 3 dans laquelle chaque élément de serrage (11) est fixé au flasque (5) de sorte que l'élément de serrage (11) soit en prise aussi contre la jante extérieure (3) de la roue.

5. Une roue selon l'une quelconque des revendications précédentes, dans laquelle chaque élément de serrage (11) comporte une face de serrage inclinée par rapport au plan du disque, ladite face de serrage (25) s'adaptant à une face inclinée (27) prévue sur la périphérie du disque (7).

6. Une roue selon la revendication 5 dans laquelle ladite face inclinée (27) est prévue sur une partie radialement en saillie de la périphérie du disque.

7. Une roue selon la revendication 5 ou 6, lorsqu'elles dépendent de la revendication 4, dans laquelle lesdites faces inclinées adaptées l'une à l'autre (25, 27) sont prévues de telle sorte que la ligne de réaction normale à ces faces inclinées adaptées l'une à l'autre traverse l'interface (23) entre l'élément de serrage (11) et la jante extérieure (3) de la roue.

8. Une roue selon l'une quelconque des revendications précédentes, dans laquelle chaque liaison élastique (15) de maintien comporte une goupille élastique tubulaire (29) qui traverse un orifice (31) ménagé dans le flasque (5) et vient en prise avec des surfaces incurvées (17) sur des bords extrêmes adjacents (19) des segments (9) des deux côtés du flasque (5).

9. Une roue selon la revendication 8, dans laquelle la goupille élastique tubulaire (29) comprend un élément cylindrique creux en acier à ressort comportant une fente (30) s'étendant axialement sur toute la longueur de l'ergot (29) à travers toute la paroi de l'ergot (29).

10. Une roue selon la revendication 8 ou la revendication 9, dans laquelle la goupille élastique tubulaire (29) est montée avec un jeu dans ledit orifice (31).

11. Une roue selon l'une quelconque des revendications 8, 9 et 10 dans laquelle la goupille élastique tubulaire (29) comporte un capuchon d'extrémité (33) fixé sur chacune de ses extrémités respectives par un boulon (35) qui traverse la goupille (29) axialement.

12. Une roue selon la revendication 11, dans laquelle chacun des capuchons d'extrémité (33) comporte une partie élargie qui s'engage dans un évidement ménagé sur la surface incurvée (17) prévue dans un bord d'extrémité (19) d'un segment (9) pour coopérer au maintien du segment (9) à la roue.

13. Une roue selon la revendication 11 ou 12, lorsqu'elles dépendent de la revendication 8, dans laquelle chaque capuchon d'extrémité (33) comporte une languette (37) qui s'engage dans la fente (30) de la goupille élastique tubulaire (29).